# EUROPEAN PATENT SPECIFICATION

(11) **EP 3 323 600 B1**
(45) Date of publication and mention of the grant of the patent: **15.01.2020**
(21) Application number: 16824454.9
(22) Date of filing: 12.07.2016
(51) Int. Cl.: B29C 64/35, B29C 64/112, B29C 64/165, B29C 64/393, B33Y 50/02, B33Y 10/00, B33Y 30/00, B33Y 40/00

(54) **METHOD AND APPARATUS FOR MANUFACTURING THREE-DIMENSIONALLY SHAPED ARTICLE**
VERFAHREN UND VORRICHTUNG ZUR HERSTELLUNG EINES DREIDIMENSIONAL GEFORMTEN ARTIKELS
PROCÉDÉ ET APPAREIL POUR LA FABRICATION D'UN OBJET PRÉSENTANT UNE FORME TRIDIMENSIONNELLE

(30) Priority: 13.07.2015 JP 2015140001
(43) Date of publication of application: 23.05.2018
(73) Proprietor: Mimaki Engineering Co., Ltd., Tomi-City, Nagano 389-0512 (JP)
(72) Inventor: OCHI, Kazuhiro, Tomi-city, Nagano 389-0512 (JP)
(74) Representative: Horn Kleimann Waitzhofer Patentanwälte PartG mbB
(86) International application number: PCT/JP2016/070519
(87) International publication number: WO 2017/010474

(56) References cited:
- FR-A1- 2 859 128
- JP-A- 2001 334 582
- JP-A- 2001 334 582
- JP-A- 2012 071 611
- JP-A- 2015 074 164

## Description

### Technical Field

The present invention relates to a method for producing a three-dimensional object and to a three-dimensional-object producing apparatus.

### Background Art

Patent document 1 recites a method for printing a three-dimensional model on a layer-upon-layer basis, the method including: a step of positioning a printing head to a first position selected in advance, the printing head including a plurality of inkjet nozzles arranged along a longitudinal direction axis line; a step of selectively adjusting the amount of ejection of a material from each of the inkjet nozzles so as to control the amount of the material distributed from the nozzles; a step of selectively distributing the material from each of the plurality of inkjet nozzles; a step of re-positioning the printing head to a second position that is selected in advance and displaced from the first position selected in advance in an axial direction along the longitudinal direction axis line; a step of, after a layer is complete, re-positioning the printing head over the layer and along a z axis, which is in a vertical direction; and a step of repeating the re-positioning steps and the distributing step until the three-dimensional model is complete.

### Related Art Documents

### Patent Documents

Patent document 1: Japanese Unexamined Patent Application Publication No. 2012-71611 (published on April 12, 2012)

JP 2001 334582 A discloses a three-dimensional molding apparatus in which, on every formation of a powder layer, powder-bound bodies are successively formed by extruding a binder from a nozzle assembly to form a three-dimensional molded article. Specifically, the binder is extruded from a plurality of the nozzles toward a specified region for inspection on the powder layer, and an image of the region for inspection is obtained by using a scanner. Then, by analyzing the image, an abnormal nozzle is specified, in which clogging of the nozzle is generated. When the abnormal nozzle exists, a cleaning liquid is fed to the nozzle from a tank for the cleaning liquid to perform cleaning.

FR 2 859 128 discloses a method for the production of a three-dimensional multi-material component whereby successive layers of at least one material are printed by means of drop ink-jet-type printing. A representation of the multi-material component produced in an ideal manner is stored in a data storage unit and serves as a reference for calculating and correcting printing errors.

### Disclosure of the Invention

### Problems to be Solved by the Invention

If an abnormal nozzle that is abnormal in the amount of ejection is included in a plurality of nozzles for producing a three-dimensional object, such an adverse effect may occur that some layers of the three-dimensional object have an excess portion or a deficient portion.

Patent document 1 recites such a technique that by randomly shifting the printing head, the hitting position of an ink from a nozzle having nozzle clogging is deconcentrated so that the adverse effect caused by the nozzle having nozzle clogging is reduced.

Although this technique makes less conspicuous the adverse effect caused by the nozzle having nozzle clogging, it is impossible to make a recovery from the adverse effect even partially.

Patent document 1 also recites that when the amount of attachment of an ink from any nozzle is excessive or insufficient, the amount of ink supply to the nozzle is adjusted to compensate for the excessive or insufficient attachment.

With this technique, however, it is impossible to make a recovery from the adverse effect caused by the already attached excessive ink or the insufficient ink.

The present invention has been made in view of the above-described problems, and it is a main object of the present invention to provide a technique that, in producing of a three-dimensional object using nozzles, enables at least a partial recovery from an adverse effect caused by an abnormal nozzle that is abnormal in the amount of ejection.

### Means of Solving the Problems

The problem is solved by a method for producing a three-dimensional object and a three-dimensional object creating apparatus according to the independent claims.

According to one aspect of the present disclosure, a method for producing a three-dimensional object includes: a nozzle checking step of detecting an ejection state of a droplet ejected from each of a plurality of nozzles of a head so as to determine whether each of the plurality of nozzles is a normal nozzle or an abnormal nozzle; and a lower-layer forming step of ejecting droplets from the plurality of nozzles so as to form a lower layer. When at least one of the plurality of nozzles is determined to be an abnormal nozzle in the nozzle checking step, the head is cleaned before and/or after the lower-layer forming step.

In this configuration, in the nozzle checking step, an ejection state of a droplet ejected from each of the plurality of nozzles of the head is detected so as to determine whether each of the plurality of nozzles is an abnormal nozzle that is abnormal in the amount of ejection or a normal nozzle that is normal in the amount of ejection. When at least one of the plurality of nozzles is determined as an abnormal nozzle, the head is cleaned before and/or after the lower-layer forming step. This ensures that suitable amounts of droplets are ejected from the cleaned head in the steps following the lower-layer forming step, enabling at least a partial recovery from the adverse effect caused by the abnormal nozzle.

(i) In the upper-layer forming step, an upper layer is formed over the lower layer in such a manner that hitting positions of the droplets ejected from the plurality of nozzles are different from hitting positions of the droplets ejected in the lower-layer forming step. A recovery nozzle, which is a normal nozzle, is caused to eject a droplet so as to cause the droplet ejected from the recovery nozzle to hit a hitting position of a droplet ejected from the abnormal nozzle in the lower-layer forming step. (ii) An amount of ejection of the droplet ejected from the recovery nozzle is adjusted based on the ejection state of the droplet ejected from the abnormal nozzle detected in the nozzle checking step. Thus, in the upper-layer forming step, a droplet is ejected from the recovery nozzle, which is a normal nozzle, in an amount of ejection that is based on the ejection state of the abnormal nozzle so that the droplet ejected from the recovery nozzle hits the hitting position of the droplet ejected from the abnormal nozzle in the lower-layer forming step. This enables at least a partial recovery from the adverse effect (occurrence of an excess portion or a deficient portion) caused by the abnormal nozzle.

In the above-described method for producing the three-dimensional object, when the amount of ejection of the droplet ejected from the abnormal nozzle detected in the nozzle checking step is smaller than the amount of ejection of a droplet ejected from a normal nozzle detected in the nozzle checking step, the amount of ejection of the droplet ejected from the recovery nozzle may be adjusted to be larger than the amount of ejection of a droplet ejected from another normal nozzle different from the recovery nozzle. When the amount of ejection of the droplet ejected from the abnormal nozzle detected in the nozzle checking step is larger than the amount of ejection of the droplet ejected from the normal nozzle detected in the nozzle checking step, the amount of ejection of the droplet ejected from the recovery nozzle may be adjusted to be smaller than the amount of ejection of the droplet ejected from the other normal nozzle different from the recovery nozzle.

In this configuration, when the amount of ejection of the droplet ejected from the abnormal nozzle is smaller than the amount of ejection of the droplet ejected from the normal nozzle, the amount of ejection of the droplet ejected from the recovery nozzle is made larger than the amount of ejection of the droplet ejected from the normal nozzle. When the amount of ejection of the droplet ejected from the abnormal nozzle is larger than the amount of ejection of the droplet ejected from the normal nozzle, the amount of ejection of the droplet ejected from the recovery nozzle is made smaller than the amount of ejection of the droplet ejected from the normal nozzle. This enables a recovery from the adverse effect caused by the abnormal nozzle.

In the above-described method for producing the three-dimensional object, when the amount of ejection of the droplet ejected from the abnormal nozzle detected in the nozzle checking step is smaller than the amount of ejection of the droplet ejected from the normal nozzle detected in the nozzle checking step, the amount of ejection of the droplet ejected from the recovery nozzle may be adjusted to a value that is larger than an average value of amounts of ejection of droplets ejected from normal nozzles excluding the recovery nozzle in the upper-layer forming step and that is equivalent to or less than twice the average value.

In this configuration, the amount of ejection of the droplet ejected from the recovery nozzle in the upper-layer forming step is determined based on an average value of the amounts of ejection of droplets ejected in the upper-layer forming step from normal nozzles excluding the recovery nozzle. This ensures efficient layer formation, without calculating the amount of ejection from the recovery nozzle every time a droplet is ejected from the recovery nozzle. Additionally, keeping the amount of ejection of the droplet ejected from the recovery nozzle equivalent to or less than twice the above-described average value prevents excessive droplet ejection, and inhibiting unnecessary ejection results in a reduction in the consumption of the material of the three-dimensional object.

In the above-described method for producing the three-dimensional object, the upper-layer forming step may include making a drawing origin at which the head is located when the plurality of nozzles start ejecting the droplets different from a drawing origin in the lower-layer forming step.

In this configuration, the drawing origin in the lower-layer forming step and the drawing origin in the upper-layer forming step are shifted from each other. This enables the upper layer to be formed over the lower layer with the hitting positions of the droplets from the nozzles being different from the hitting positions in the lower-layer forming step.

In the above-described method for producing the three-dimensional object, in the upper-layer forming step, the upper-layer forming step may include moving the drawing origin in the upper-layer forming step randomly from the drawing origin in the lower-layer forming step.

In this configuration, even though the droplet ejected from the recovery nozzle enables a recovery from the adverse effect caused by the abnormal nozzle, the adverse effect somewhat remains in some portions; still, these portions are deconcentrated so that the adverse effect is made much less conspicuous.

In the above-described method for producing the three-dimensional object, the upper-layer forming step may include: after forming the upper layer over the lower layer in the upper-layer forming step, a flattening step of removing an excess portion from the upper layer so as to flatten the upper layer; and after the flattening step, a curing step of curing the lower layer and the upper layer to form the unit layer.

In this configuration, after the lower layer and the upper layer have been formed, the lower layer and the upper layer are flattened and cured at the same time. This increases the degree of flatness as a whole, and reduces the amount of excess portion removed at the time of flattening, resulting in a reduction in the consumption of the material of the three-dimensional object.

The above-described method for producing the three-dimensional object may include executing the lower-layer forming step, the upper-layer forming step, the flattening step, and the curing step a plurality of times, and may further include a finishing-layer forming step of forming a finishing layer over the upper layer after a last upper-layer forming step performed for a last time and before the flattening step following the last upper-layer forming step. The finishing layer has a configuration identical to a configuration of the upper layer. A last flattening step performed for a last time may include removing an excess portion of a predetermined thickness from an upper surface of the finishing layer.

In this configuration, a depression that the abnormal nozzle caused to occur on the last formed upper layer is filled with a finishing layer that has a configuration identical to a configuration of the upper layer. Then, an excess portion is removed and flattening is performed. This improves final shape accuracy.

In the above-described method for producing the three-dimensional object, in a last curing step performed for a last time, a curing period of time may be longer than a curing period of time in another curing step.

In this configuration, while the finishing layer is being cured, the upper layer and the lower layer immediately under the finishing layer are cured sufficiently. Specifically, in a configuration in which each of the upper layers and the lower layers are cured in one curing step, if the curing period of time for each curing step is set at a minimum possible period of time, the last formed upper layer and the last formed lower layer cannot be cured sufficiently in some cases. In this respect, as in this configuration, the curing period of time in the last curing step performed for the last time is longer than the curing period of time in another curing step. This enables the last formed upper layer and the last formed lower layer to be cured sufficiently.

In the above-described method for producing the three-dimensional object, the head may be configured to move in a main scanning direction relative to an ejection target region and configured to eject the droplets from the plurality of nozzles, and the head may include a plurality of nozzle rows each including a plurality of the nozzles arranged in a sub-scanning direction crossing the main scanning direction.

In this configuration, the head includes a plurality of nozzle rows each including a plurality of the nozzles arranged in the sub-scanning direction. This increases the speed at which each layer is formed.

According to another aspect of the present disclosure, a three-dimensional-object producing apparatus includes: a head including a plurality of nozzles; a nozzle check unit configured to detect an ejection state of a droplet ejected from each of the plurality of nozzles so as to determine whether each of the plurality of nozzles is a normal nozzle or an abnormal nozzle; and a cleaner configured to clean the head.

This configuration provides effects equivalent to the effects provided by the method according to the present invention for producing a three-dimensional object.

The three-dimensional-object producing apparatus may further include an ejection controller configured to control the plurality of nozzles to eject droplets so as to form a lower layer and configured to form an upper layer over the lower layer in such a manner that hitting positions of the droplets ejected from the plurality of nozzles are different from hitting positions of the droplets ejected in forming the lower layer. In forming the upper layer, the ejection controller may be configured to: cause a recovery nozzle, which is a normal nozzle, to eject a droplet in such a manner that the droplet ejected from the recovery nozzle hits a hitting position of a droplet ejected from the abnormal nozzle in forming the lower layer; and adjust an amount of ejection of the droplet ejected from the recovery nozzle based on the ejection state of the droplet ejected from the abnormal nozzle detected by the nozzle check unit.

This configuration provides effects equivalent to the effects provided by the method according to the present invention for producing a three-dimensional object. Effects of the Invention

The present invention provides such an effect that in producing of a three-dimensional object using nozzles, at least a partial recovery is realized from an adverse effect caused by an abnormal nozzle that is abnormal in the amount of ejection.

### Brief Description of the Drawings

[FIG. 1] FIG. 1 is a schematic illustrating a procedure for producing a three-dimensional object M using a printer 100, the procedure being one embodiment of the method according to the present invention for producing a three-dimensional object.
[FIG. 2] FIG. 2 is a schematic illustrating a configuration of a head 1 of the printer 100, which is used in the one embodiment of the method according to the present invention for producing a three-dimensional object.
[FIG. 3] FIG. 3 is a schematic illustrating some steps of the procedure for producing the three-dimensional object M using the printer 100, which is the one embodiment of the method according to the present invention for producing a three-dimensional object.
[FIG. 4] FIG. 4 is a schematic illustrating some steps of the procedure for producing the three-dimensional object M using the printer 100, which is the one embodiment of the method according to the present invention for producing a three-dimensional object.

### Mode for Carrying out the Invention

### <Method for Producing a Three-dimensional Object>

### [One embodiment of the method according to the present invention for producing a three-dimensional object]

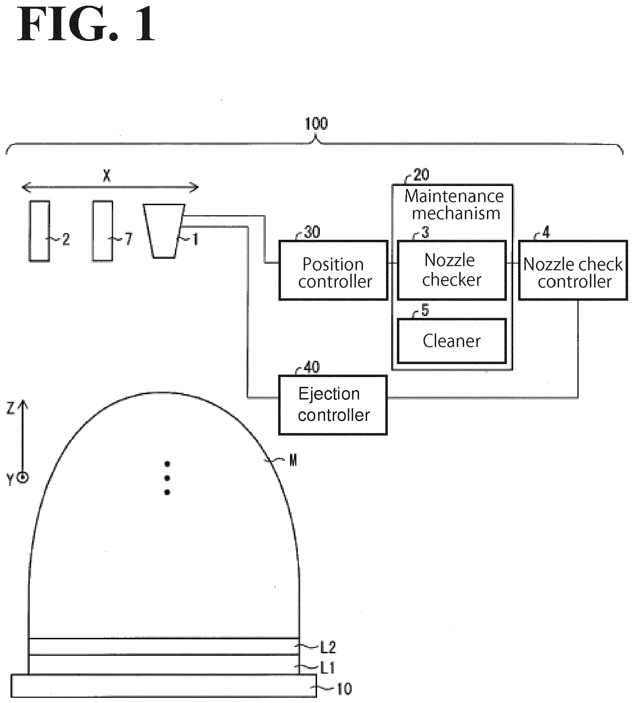

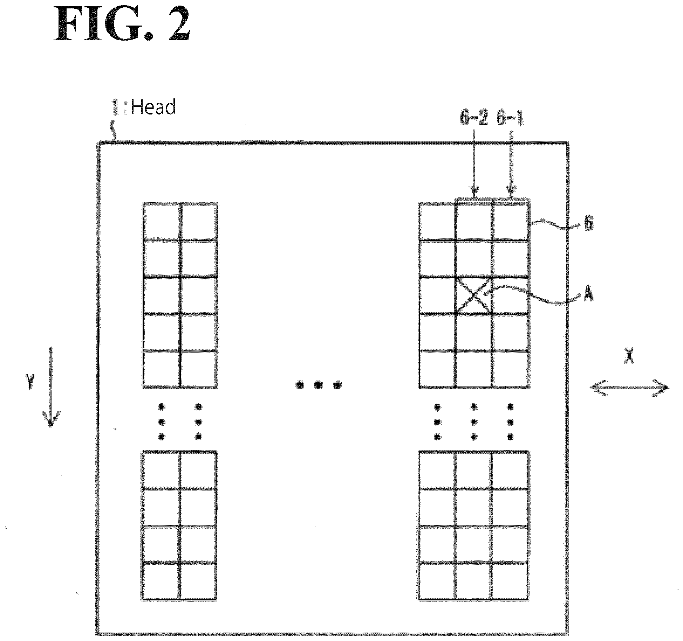

One embodiment of the method according to the present invention for producing a three-dimensional object will be described. FIG. 1 is a schematic illustrating a procedure for producing the three-dimensional object M using the printer 100 (three-dimensional-object producing apparatus). The procedure is the one embodiment of the method according to the present invention for producing a three-dimensional object. FIG. 2 is a schematic illustrating a configuration of the head 1 of the printer 100, which is used in the one embodiment of the method according to the present invention for producing a three-dimensional object. It is noted that FIG. 1 is a cross-sectional view of the three-dimensional object M along a surface perpendicular to a surface of a support platform 10.

In this embodiment, the three-dimensional object M is produced by inkjet scheme using ultraviolet curable ink.

It will be understood that while ultraviolet curable ink is used in this embodiment, this will not limit the ink used in the method according to the present invention for producing a three-dimensional object. In the method according to the present invention for producing a three-dimensional object, any other ink may be selected according to, for example, the purpose of the three-dimensional object to be produced. For example, it is possible to employ a conventionally known build material.

Examples of a specific kind of ink include ultraviolet curable ink and thermoplastic ink. Among these inks, ultraviolet curable ink is preferred. Ultraviolet curable ink readily cures in a shorter period of time and thus enables a unit layer to be formed in a shorter period of time. Also, ultraviolet curable ink can be more readily deposited and thus enables a three-dimensional object to be produced in a shorter period of time.

The ultraviolet curable ink contains an ultraviolet curable compound. The ultraviolet curable compound may be any compound that cures under ultraviolet light. Examples of the ultraviolet curable compound include curable monomer and curable oligomer that are polymerized under ultraviolet light. Examples of the curable monomer include low viscosity acrylic monomer, vinyl ethers, oxetane monomer, and cycloaliphatic epoxy monomer. Examples of the curable oligomer include acrylic oligomer.

It will be understood that when the three-dimensional object to be produced has an overhang portion, a conventionally known support material may be used.

As illustrated in FIG. 1, the printer 100 includes the head 1, a UV-LED (Ultraviolet-Light-Emitting Diode) lamp 2, a flattener 7, a maintenance mechanism 20, a nozzle check controller 4, a position controller 30, an ejection controller 40, and the support platform 10. The maintenance mechanism 20 includes a nozzle checker 3 and a cleaner 5.

Also as illustrated in FIG. 1, the three-dimensional object M is formed by laminating a plurality of unit layers in the order of unit layers L1, ... Ln (n is an integer). As described later, the unit layers L1, ... Ln (n is an integer) are formed by forming upper layers L1b, ... Lnb (n is an integer) over lower layers L1a, ... Lna (n is an integer).

### (Head 1)

The head 1 is an inkjet head to eject ink (droplets). The head 1 reciprocates in the X direction to scan over the support platform 10 and other objects. While scanning, the head 1 ejectes ink onto the support platform 10 or the previously formed unit layer, over which another unit layer is formed.

It will be understood that the head used in the method according to the present invention for producing a three-dimensional object may be a conventionally known head. Examples include an inkjet head that utilizes vibration of a piezoelectric device to eject droplets (an inkjet head that utilizes mechanical deformation of an electrostrictive element to form ink droplets), and an inkjet head that utilizes heat energy.

Also in this embodiment, such a configuration will be described that while the head 1 is scanning in the X direction over the support platform 10, the ejection target remains unmoved, with the head 1 moving. This configuration, however, is not intended as limiting the method according to the present invention for producing a three-dimensional object; it is also possible to use a three-dimensional-object producing apparatus in which the head and the ejection target move relative to each other.

### (Nozzles 6)

Nozzles 6 eject ink. As illustrated in FIG. 2, the head 1 includes nozzle rows 6-1, 6-2, ... each made up of nozzles 6 arranged in a sub-scanning direction (the Y direction). All the nozzles 6 are included in any of the nozzle rows. In other words, the nozzles 6 are grouped (grouped) into the nozzle rows. It is noted that the sub-scanning direction is a direction orthogonal to the main scanning direction (the X direction).

In this respect, the nozzle rows 6-1, 6-2, ... eject different kinds of ink (build material-use ink, support material-use ink, and color material-use ink). In other words, the nozzles constituting each one nozzle row eject the same kind of ink.

### (UV-LED lamp 2)

The UV-LED lamp 2 is an instrument that radiates ultraviolet light to the ultraviolet curable ink ejected from the head 1.

It will be understood that when ultraviolet curable ink is used in the method according to the present invention for producing a three-dimensional object, the instrument to radiate light will not be limited to the UV-LED lamp 2; it is also possible to employ any of various, conventionally known instruments that are capable of radiating ultraviolet light.

### (Flattener 7)

The flattener 7 applies pressure to a layer formed of the ultraviolet curable ink ejected from the head 1 to remove an excess portion, thereby flattening the layer. This makes the layers uniform in thickness, improving the accuracy with which the layers are deposited. This prevents the three-dimensional object from being deformed.

Examples of the flattener include a metal roller, a planar metal member, a pad rubber of silicon or other material, a Teflon (registered trademark) roller, and a Teflon (registered trademark) film.

### (Maintenance mechanism 20)

The maintenance mechanism 20 includes the nozzle checker 3 and the cleaner 5. The maintenance mechanism 20 is capable of accommodating the head 1. The maintenance mechanism 20 causes the nozzle checker 3 to check the head 1 accommodated in the maintenance mechanism 20, and/or causes the cleaner 5 to clean the head 1 accommodated in the maintenance mechanism 20. The maintenance mechanism 20 is located at one end of the directions in which the head 1 moves and outside the range over which the head 1 scans.

### (Nozzle checker 3)

The nozzle checker 3 is for checking the nozzles 6.

In this embodiment, "ejection failure nozzle" refers to a nozzle incapable of normal ink ejection because of, for example, ink clogging or some other causes.

It will be understood that the nozzle check unit used in the method according to the present invention for producing a three-dimensional object may be a conventionally known nozzle check unit. In this embodiment, a photosensor that checks the nozzles by breaking an optical path is used. Another example of the nozzle check unit is such a configuration that checks the nozzles in a test ejection region by checking the state of an ejection target to which an ink has been ejected. It is noted, however, that a photosensor is preferred in such a case that the distance between the nozzle check unit and the ink ejecting surface of the head is kept approximately constant when the head or a support structure is moved in the Z direction so that an error is prevented from being caused by the movement of the head or the support platform in the Z direction.

The check by the nozzle checker 3 is controlled by the nozzle check controller 4. From the nozzle check controller 4, the nozzle checker 3 receives a signal indicating an instruction as to when to check which nozzle 6, and checks the nozzle 6 based on the instruction.

### (Nozzle check controller 4)

The nozzle check controller 4 is for controlling the check by the nozzle checker 3. Specifically, the nozzle check controller 4 controls the nozzle checker 3 to check the check target nozzle 6 before a unit layer is formed using ink ejected from the check target nozzle 6 and after another unit layer immediately under the unit layer has been formed. The time when the nozzle checker 3 checks the nozzles 6 is as close as possible to the time immediately before using the nozzles 6. This improves the efficiency with which an ejection failure is found out in a less frequently used nozzle 6.

In this embodiment, the check by the nozzle checker 3 is controlled by control means (the nozzle check controller 4) provided in the printer 100. This configuration, however, is not intended as limiting the present invention; the check may be performed by manually operating the printer at predetermined time intervals.

### (Cleaner 5)

The cleaner 5 is for cleaning the nozzles 6. The cleaner 5 is made up of: a wiper to wipe the surface of the head 1 on which the nozzles 6 are formed; a washing device in which the head is immersed in a reservoir of cleaning solution; and other elements.

When the nozzle checker 3 has determined that at least one nozzle 6 among the plurality of nozzles 6 of the head 1 is an abnormal nozzle, the cleaner 5 cleans, before and/or after a unit layer is formed, the surface of the head 1 on which the nozzles 6 are formed. The timing at which the cleaner 5 performs cleaning is preferably before the unit layer is formed using the ink ejected from the check target nozzle 6.

### (Position controller 30)

The position controller 30 is for controlling variations of the distance between the nozzle checker 3 and the ink ejecting surface of the head 1 within a predetermined distance even while the head 1 has moved.

Specifically, the position controller 30 detects the position of the head 1 in the Z axis direction to recognize a discrepancy between the position of the head 1 in the Z axis direction and the position of the nozzle checker 3 in the Z axis direction, and controls the head 1 to move in the Z axis direction so that the discrepancy no longer exists at the time of the check. That is, the position controller 30 moves the position of the head 1 in the Z axis direction immediately before the nozzle checker 3 checks the nozzles 6, and then moves the head 1 to the maintenance mechanism 20, where the nozzles 6 are checked.

It will be understood that the position controller 30 may not necessarily be provided if the nozzle checker 3 is located at an extension of a head support supporting the head 1 movably in the X direction, and the position of the nozzle checker 3 relative to the head 1 is fixed. This is because the position of the nozzle checker 3 relative to the ink ejecting surface is fixed, which in turn keeps a constant distance between the position of an ink subjected to check by the nozzle checker 3 and the surface from which this ink is ejected.

The position controller used in the method according to the present invention for producing a three-dimensional object may be any position controller capable of controlling at least one of the nozzle checker 3, the support platform 10, and the head 1 to move in the deposition direction and controlling variations of the distance between the head 1 and the nozzle checker 3 within a predetermined distance.

### (Support platform 10)

The support platform 10 is a platform on which a three-dimensional object to be formed is supported.

In the following description of this embodiment, the head 1 is moved in the sub-scanning direction (the Y direction) and the Z direction with the support platform 10 fixed. In the three-dimensional-object producing apparatus according to the present invention, any other configuration is possible insofar as the head 1 and the ejection target move relative to each other. For example, the support platform 10 may be moved in the Y direction (the sub-scanning direction) every time the head 1 finishes one main scanning, or the support platform 10 may be moved in the vertically downward direction every time formation of one unit layer is completed.

### (Ejection controller 40)

The ejection controller 40 controls the amount and timing of ejection of an ink (droplet) from each of the nozzles 6. By controlling the ejection timing, the ejection controller 40 is also capable of controlling the ejection position the ink (droplet) from each of the nozzles 6.

Specifically, the ejection controller 40 causes the nozzles 6 to eject droplets so as to form the lower layers L1a, ... Lna (n is an integer) and form the upper layers L1b, ... Lnb (n is an integer) over the lower layers L1a, ... Lna (n is an integer) in such a manner that the hitting positions of the droplets ejected from the nozzles 6 are different from the hitting positions of the droplets in forming the lower layers L1a, ... Lna (n is an integer).

As described later, in forming the upper layers L1b, ... Lnb (n is an integer), the ejection controller 40 controls a recovery nozzle E, which is a normal nozzle, to eject a droplet F in such a manner that the droplet F, which has been ejected from the recovery nozzle E, hits the hitting position of a droplet D, which was ejected from an abnormal nozzle A in forming the lower layers L1a, ... Lna (n is an integer). Then, the ejection controller 40 adjusts the amount of ejection from the recovery nozzle E detected by the nozzle check unit (the nozzle checker 3 and the nozzle check controller 4) based on the ejection state of the abnormal nozzle A.

### [Method for Manufacturing Three-dimensional Object M]

Next, a method for producing the three-dimensional object M will be described.

Before printing starts, the head 1 is accommodated in the maintenance mechanism 20.

When the nozzle check controller 4 recognizes that printing has started (start of producing of a three-dimensional object), the nozzle check controller 4 then recognizes a nozzle 6 used to form the unit layer L1. For example, the nozzle check controller 4 the recognizes the nozzle 6 used to form the unit layer L1 based on data indicating when to use which nozzle 6 to eject ink. The data may be prepared by the nozzle check controller 4 itself based on image data of the three-dimensional object M or may be prepared by another hardware in which printing software is installed.

The nozzle check controller 4 recognizes the start of printing in the following manner. A user inputs an instruction to start producing into an input device (not illustrated), and the nozzle check controller 4 receives the instruction, thus recognizing the start of printing. When a single start instruction instructs producing of a plurality of kinds of three-dimensional objects, the nozzle check controller 4 may recognize a start of printing at the timing when producing of one kind of three-dimensional object is changed to producing of another kind of three-dimensional object.

The nozzle check controller 4 sends an instruction to the nozzle checker 3 to check the nozzle 6 used to form the unit layer L1 and check a nozzle(s) 6 included in the same nozzle row in which the above-described nozzle 6 is included. This configuration ensures efficient check in that nozzles 6 ejecting the same kind of ink are checked together, even if the total amount of ejection of ink and the frequency of application of ink greatly vary depending on the kind of ink. In the method according to the present invention for producing a three-dimensional object, the nozzles 6 may not necessarily be checked on a nozzle-row basis; it is possible to check a nozzle 6 used to form one unit layer.

The nozzle checker 3 checks the nozzles 6 based on an instruction from the nozzle check controller 4 (nozzle checking step). Specifically, the nozzle checker 3 detects an ejection state of an ink ejected from each of the plurality of nozzles 6 of the head 1 so as to determine whether each of the plurality of nozzles 6 is a normal nozzle or an abnormal nozzle. More specifically, the nozzle checker 3 makes a determination as to the ejection state of an ink based on whether light is blocked by an optical sensor. The, the nozzle checker 3 sends the result of detection to the nozzle check controller 4. The nozzle check controller 4 determines a nozzle as a normal nozzle if the amount of ejection from the nozzle within a predetermined period of time is within a specified range, and determines a nozzle as an abnormal nozzle if the ejection state of the nozzle within the predetermined period of time is outside the specified range. For example, the nozzle check controller 4 determines a nozzle as an ejection failure nozzle if the amount of ejection from the nozzle within the predetermined period of time is zero (non-ejection state) or if the ejection state of the nozzle is, if not zero, less than a predetermined amount. It will be understood that various kinds of data used to determine ejection state is stored in a recording unit (not illustrated), and the nozzle check controller 4 reads the data from the recording unit and uses the data to determine whether a nozzle is a normal nozzle or an abnormal nozzle.

The following description is under the assumption that at this step, the abnormal nozzle A in the nozzle row 6-2 is detected as an ejection failure nozzle.

When a nozzle 6 acknowledged as an ejection failure nozzle exists, the cleaner 5 may, for example, perform wiping of the nozzle 6-formed surface and then the nozzles 6 may be caused to eject a tiny amount of ink in the downward direction (flashing). This configuration prevents thickening of the ejection failure nozzle.

When in the next and later checks a nozzle is acknowledged as an ejection failure nozzle, it is possible, in order to shorten the producing time, to increase the number of times of scanning necessary for forming an image of a unit region, thereby reducing the amount of ejection from each nozzle 6 per scanning. More specifically, the printer 100 can reduce the influence of the ejection failure nozzle by performing multi-path printing or increasing the number of multi-paths.

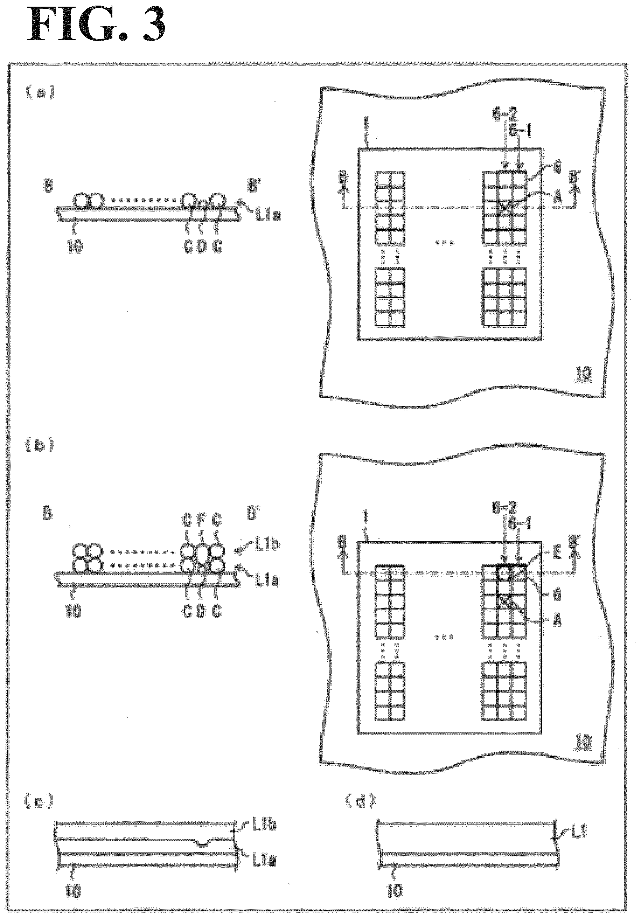

Next, by referring to FIG. 3(a), a step of forming the lower layer L1a (lower-layer forming step) will be described. With the head 1 scanning in the X direction, the plurality of nozzles 6 eject ink (droplets). In this respect, the UV-LED lamp 2 abuts on the head 1 and moves together with the head 1.

The UV-LED lamp 2 radiates ultraviolet light to the ink ejected from the head 1. This causes the ejected ink to cure.

Next, the head 1 is moved in the Y direction every time the head 1 has performed scanning in the X direction.

The distance over which the head 1 moves is the same as the length in the sub-scanning direction (the Y direction) of an ejection region (such as the nozzle row 6-1 and the nozzle row 6-2) over which the head 1 ejectes ink. That is, in this embodiment, a case of a single path will be described. In the case of a single path, a unit image region (a print region of a unit length square) is formed in one time of main scanning. It will be understood that the present invention will not be limited to a single path but can be applied to multi-paths. That is, the distance over which the head once moves in the sub-scanning direction (the Y direction) is shorter than the length in the sub-scanning direction (the Y direction) of an ejection region (such as the nozzle row 6-1 and the nozzle row 6-2) over which the head ejectes ink. Thus, main scanning is performed a plurality of times to print a unit image region.

Thus, by the head 1 scanning in the X direction and moving in the Y direction, formation of the lower layer L1a is completed.

In this respect, the size of the droplet D ejected from the abnormal nozzle A is smaller than the size of a droplet C ejected from a normal nozzle 6.

Next, by referring to FIG. 3(b), a step of forming the upper layer L1b (upper-layer forming step) will be described.

First, the head 1 is moved in the Z direction so as to form the upper layer L1b over the lower layer L1a. Further, the head 1 is moved on the X-Y plane so that the hitting positions of the droplets ejected from the nozzles 6 are different from the hitting positions of the droplets in forming the lower layer L1a. In this embodiment, as illustrated in FIG. 3(b), by shifting the head 1 in the Y direction, the hitting positions of the droplets ejected from the nozzles 6 are made different from the hitting positions of the droplets in forming the lower layer L1a. Specifically, in forming the upper layer L1b, the normal nozzle (the recovery nozzle E) that is shifted in the Y direction from the abnormal nozzle A in the nozzle row 6-2 by a distance equivalent to two nozzles ejectes the droplet F in such a manner that the droplet F, which has been ejected from the normal nozzle (the recovery nozzle E), hits the hitting position of the droplet D ejected from the abnormal nozzle A in the nozzle row 6-2 in forming the lower layer L1a.

Then, similarly to the lower layer L1a, the upper layer L1b is formed by causing the head 1 to scan in the X direction and then move in the Y direction. In this respect, the ejection controller 40 adjusts the amount of ejection from the recovery nozzle E based on the ejection state of the abnormal nozzle A detected in the nozzle checking step. Thus, in the upper-layer forming step, the recovery nozzle E ejectes an amount of droplet F that is based on the ejection state of the abnormal nozzle A so that the droplet F ejected from the recovery nozzle E, which is a normal nozzle, hits the hitting position of the droplet D ejected from the abnormal nozzle A in the lower-layer forming step. This enables at least a partial recovery from the adverse effect (occurrence of an excess portion or a deficient portion) caused by the abnormal nozzle.

Specifically, in one embodiment, when the ejection state of the abnormal nozzle A detected in the nozzle checking step is smaller in the amount of ejection than the ejection state of the normal nozzle detected in the nozzle checking step (including non-ejection state), the ejection controller 40 adjusts the amount of ejection from the recovery nozzle E to be larger than the amount of ejection from another normal nozzle different from the recovery nozzle E. When the ejection state of the abnormal nozzle A detected in the nozzle checking step is larger in the amount of ejection than the ejection state of the normal nozzle detected in the nozzle checking step, the ejection controller 40 adjusts the amount of ejection from the recovery nozzle E to be smaller than the amount of ejection from the other normal nozzle different from the recovery nozzle E.

This ensures that when the amount of ejection from the abnormal nozzle A is smaller than the amount of ejection from a normal nozzle, the amount of ejection from the recovery nozzle E is made larger than the amount of ejection from the normal nozzle, while when the amount of ejection from the abnormal nozzle A is larger than the amount of ejection from the normal nozzle, the amount of ejection from the recovery nozzle E is made smaller than the amount of ejection from the normal nozzle. This ensures a recovery from the adverse effect caused by the abnormal nozzle A. For example, as illustrated in FIG. 3(b), the large droplet F of the upper layer L1b ejected from the recovery nozzle E is made to hit the small droplet D of the lower layer L1a ejected from the abnormal nozzle A. This prevents an excess portion or a deficient portion from occurring on the unit layer L1. This reduces the amount of removal for flattening, described later, increasing the speed of deposition.

There is no particular limitation to the ejection controller 40's adjustment of the amount of ejection from the recovery nozzle E. In one embodiment, when the ejection state of the abnormal nozzle A detected in the nozzle checking step is smaller in the amount of ejection than the ejection state of the normal nozzle detected in the nozzle checking step, the ejection controller 40 may adjust the amount of ejection from the recovery nozzle E to a value that is larger than an average value of the amounts of ejection from normal nozzles excluding the recovery nozzle E in the upper-layer forming step and that is equivalent to or less than twice the average value. Thus, the ejection controller 40 determines the amount of ejection from the recovery nozzle E in the upper-layer forming step based on an average value of the amounts of ejection from normal nozzles excluding the recovery nozzle E in the upper-layer forming step. This ensures efficient layer formation, without calculating the amount of ejection from the recovery nozzle E every time a droplet is ejected from the recovery nozzle E. Additionally, keeping the amount of ejection from the recovery nozzle E equivalent to or less than twice the above-described average value prevents excessive droplet ejection, and inhibiting unnecessary ejection results in a reduction in the consumption of the material of the three-dimensional object.

In another embodiment, the ejection controller 40 preferably adjusts the amount of ejection from the recovery nozzle E so that an average total droplet appropriate amount of droplets C ejected from a normal nozzle for the lower layer L1a and the upper layer L1b is approximately the same as a total droplet appropriate amount of droplets ejected from the abnormal nozzle A and the recovery nozzle E. This ensures a complete recovery from the adverse effect caused by the abnormal nozzle A.

There is no particular limitation to a method of making the hitting positions of the droplets ejected from the nozzles 6 in forming the upper layer L1b different from the hitting positions of the droplets in forming the lower layer L1a. An example is that a drawing origin at which the head 1 is located when the plurality of nozzles 6 start ejecting droplets is made different between the upper-layer forming step and the lower-layer forming step.

In particular, the drawing origin in the upper-layer forming step may be moved randomly from the drawing origin in the lower-layer forming step. In this configuration, even though the droplet ejected from the recovery nozzle E enables a recovery from the adverse effect caused by the abnormal nozzle A, the adverse effect somewhat remains in some portions; still, these portions are deconcentrated so that the adverse effect is made much less conspicuous.

Next, after the upper-layer forming step, as illustrated in FIG. 3(c), the flattener 7 performs a flattening step of removing an excess portion from the upper layers L1b, ... Lnb (n is an integer) so as to flatten the upper layers L1b, ... Lnb (n is an integer). Then, after the flattening step, as illustrated in FIG. 3(d), a curing step of curing the lower layers L1a, ... Lna (n is an integer) and the upper layers L1b, ... Lnb (n is an integer) is performed. Thus, after the lower layers L1a, ... Lna (n is an integer) and the upper layers L1b, ... Lnb (n is an integer) have been formed, these layers are flattened and cured at the same time. This increases the degree of flatness as a whole, and reduces the amount of excess portion removed at the time of flattening, resulting in a reduction in the consumption of the material of the three-dimensional object M.

Next, the nozzle check controller 4 sends an instruction to the nozzle checker 3 to check the nozzle 6 used to form a unit layer L2 and check a nozzle(s) 6 included in the same nozzle row in which the above-described nozzle 6 is included. Thus, in the method according to the present invention for producing a three-dimensional object, control may be performed to check a nozzle that is to eject ink for the first time after the start of producing, before a unit layer is formed using the ink. A determination as to which kind the nozzle corresponds to may be made based on data indicating when to use which nozzle to eject ink. This control ensures that check is performed with respect to only those nozzles that are used for the first time to form a unit layer, that is, those nozzles that have never been used to form any previous unit layers. This reduces the number of nozzles to be checked. As a result, the time for checking nozzles is shortened, and the time before the next unit layer is formed is shortened.

Before checking the nozzles, the position controller 30 controls the position of the nozzle checker 3 to keep variations of the distance between the nozzle checker 3 and the ink ejecting surface of the head 1 within a predetermined distance. For example, the position controller 30 moves the position of the head 1 in the Z direction as well. This control keeps the distance between the nozzle checker 3 and the ink ejecting surface of the head 1 approximately constant even when the head 1 is moved in the Z direction to deposit a unit layer. Thus, when the nozzle checker 3 checks an ink, the distance between the position of the ink and the ink ejecting surface is at any time kept constant. This inhibits the influence that the head 1's movement in the Z direction has on the check. The "predetermined length" may be set as desired based on, for example, the thickness of the unit layer. Also, information indicating the "predetermined length" is stored in a recording unit (not illustrated), and the position controller 30 reads the information.

In this embodiment, the position controller 30 moves the head 1 in the Z direction to adjust the positions of the head 1 and the nozzle checker 3 relative to each other. This, however, is not intended as limiting the present invention. For example, it is possible to move the support platform 10 and/or the nozzle checker 3 to adjust the relative positions.

Next, the position controller 30 move the head 1 in the Z direction to form the unit layer L2.

The unit layer L2 is formed in a manner similar to the manner in which the unit layer L1 is formed. After the unit layer L2 has been formed, other unit layers Lx (x is an integer) are deposited upon one another in the Z direction. In this respect, after one unit layer has been formed, a check is performed with respect to a check target, which in this case is a nozzle(s) 6 included in the same nozzle row in which the nozzle 6 ejecting the ink used to form the next unit layer to be deposited is included.

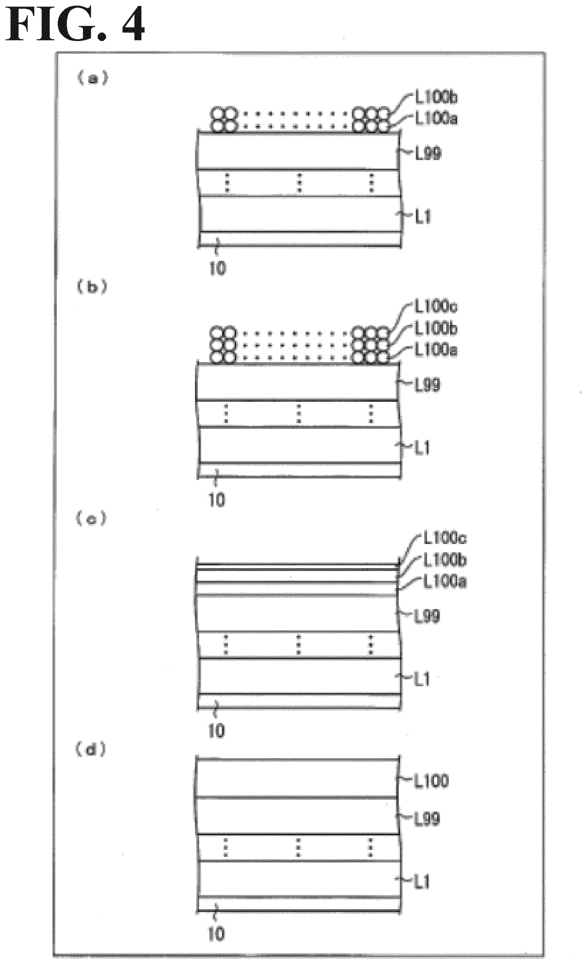

Next, finishing processing will be described. In this embodiment, n unit layers constitute the three-dimensional object M. After a last upper-layer forming step performed for the last time (FIG. 4(a)) and before the following flattening step, a finishing-layer forming step (FIG. 4(b)) is performed. The finishing-layer forming step includes forming a finishing layer L100c, which has the same configuration as the configuration of the upper layer L100b, over an upper layer L100b. In a last flattening step performed for the last time (FIG. 4(c)), an excess portion of a predetermined thickness is removed from the upper surface of the finishing layer L100c. An example of the predetermined thickness is a thickness equivalent to the thickness of the finishing layer L100c.

Thus, on the last formed upper layer L100b, the printer 100 fills the depression caused by the abnormal nozzle with the finishing layer L100c and then performs flattening by removing an excess portion. This improves final shape accuracy.

Then, in the last curing step performed for the last time (FIG. 4(d)), the curing period of time may be longer than the curing period of time in another curing step. In this configuration, while the finishing layer L100c is being cured, the upper layer L100b and a lower layer L100a immediately under the finishing layer L100c are cured sufficiently. Specifically, in a configuration in which each of the upper layers L1b, ... L100b and the lower layers L1a, ... L100a are cured in one curing step, if the curing period of time for each curing step is set at a minimum possible period of time, the last formed upper layer L100b and the lower layer L100a cannot be cured sufficiently in some cases. In this respect, as in this configuration, the curing period of time in the last curing step performed for the last time is longer than the curing period of time in another curing step. This enables the last formed upper layer L100b and the lower layer L100a to be cured sufficiently.

Also in this embodiment, the following check may be performed, in addition to the above-described check.

While a predetermined number of unit layers are being formed, the nozzle check controller 4 may control the nozzle checker 3 to check a nozzle 6 that has not ejected ink a predetermined number of times and a nozzle 6 that has not ejected a predetermined amount of ink. This control ensures detection of an ejection failure in a less frequently used nozzle 6.

The "predetermined number", the "predetermined number of times", and the "predetermined amount" may be set as desired based on, for example, ease of ink thickening or the size of a unit layer, and may vary from to ink kind to ink kind. Also, information indicating the "predetermined number", the "predetermined number of times", and the "predetermined amount" are stored in a recording unit (not illustrated), and the nozzle check controller 4 reads the information.

In the method according to the present invention for producing a three-dimensional object, the nozzle checker 3 may be controlled to check a nozzle that has not met any of the above-described conditions within a predetermined period of time. For example, it is possible to check, every one hour, a nozzle 6 that has not ejected a predetermined amount of ink or that has not performed a predetermined number of times of ejection.

Also, after a predetermined number of unit layers have been formed, the nozzle checker 3 checks the nozzle row 6-1, independently of the check performed so far. After the check of the nozzle row 6-1 and after a predetermined number of unit layers have been formed, the nozzle checker 3 checks the nozzle row 6-2, independently of the check performed so far.

In a similar, the nozzle checker 3 checks all the other nozzle rows. For example, the nozzle checker 3 checks, on one layer basis, the nozzle rows in the order of 6-1, 6-2, and so forth. Thus, the nozzles are organized into a plurality of groups and checked on a group basis. This enables a three-dimensional object to be produced with improved accuracy. For example, when all the nozzles 6 are checked every time a constant number of unit layers are formed, a surface state of a unit layer formed immediately before formation of the constant number of unit layers differs from surface states of unit layers formed so far in such respects as dry state and wettability. This is because the time before the next unit layer is formed on the surface of the previous unit layer differs because of the time spent in the check of the nozzles 6.

In light of this situation, in this embodiment, a check is performed on a group basis. This shortens the time before the next unit layer is formed. Also, by performing a check every time a constant number of layers are formed, the time between formation of one unit layer and formation of the next unit layer is closer to uniform time throughout the time during which a three-dimensional object is produced.

Information indicating which nozzle 6 belongs to which group (group information) is stored in advance in a recording unit (not illustrated), and the nozzle check controller 4 receives the information from the recording unit.

In this embodiment, the nozzles are organized into a plurality of groups, and the groups are checked in order. The nozzles, however, may not necessarily be grouped into nozzle rows. For example, the nozzle rows may be more meticulously segmented. For example, one nozzle row or a plurality of nozzle rows may be divided into an upstream-side nozzle row portion and a downstream-side nozzle row portion in the sub-scanning direction. Before one unit layer is formed, the upstream-side nozzle row portion may be checked, and before another unit layer is formed, the downstream side nozzle row may be checked.

In the three-dimensional-object producing apparatus according to the present invention, the above-described grouping and the check performed on a group basis, as in the above-described embodiment, may not necessarily be performed. Every time a predetermined number of unit layers have been formed and every time a predetermined period of time has passed, at least some nozzles 6 determined in advance may be checked. For example, less frequently used nozzles (group) may be selected in advance and a nozzle check may be repeated at predetermined time intervals.

It will be understood that the method of checking the nozzles 6 while the three-dimensional object M is being produced, as in the above-described embodiment, is also one embodiment of the three-dimensional-object producing apparatus according to the present invention.

### [Example of Implementation by Software]

Control blocks of the nozzle check controller 4, the position controller 30, and the ejection controller 40 may be implemented by logic circuits (hardware) formed on, for example, integrated circuits (IC chips), or may be implemented by software using CPU (Central Processing Unit).

In the latter case, the nozzle check controller 4, the position controller 30, and the ejection controller 40 each include: a CPU that executes a command of a program, which is software to implement the function of each controller; a ROM (Read Only Memory) or a storage device (these are referred to as "recording medium") that stores the program and various kinds of data in a form readable by a computer (or CPU); and a RAM (Random Access Memory) in which the program is developed. Then, the computer (or CPU) reads the program from the recording medium and executes the program so as to accomplish the object of the present invention. An example of the recording medium is a "non-transitory, tangible medium", such as a tape, a disc, a card, a semiconductor memory, and a programmable logic circuit. Also, the program may be supplied to the computer through any desired transmitting medium (such as a communication network and a broadcast wave) capable of transmitting the program. It will be understood that the present invention can also be implemented when the program is in the form of a data signal embodied by electronic transmission and embedded in a carrier wave.

### <Additional Notes>

As has been described hereinbefore, one embodiment of the method according to the present invention for producing a three-dimensional object includes: a nozzle checking step of detecting an ejection state of a droplet (ink) ejected from each of the plurality of nozzles 6 of the head 1 so as to determine whether each of the plurality of nozzles 6 is a normal nozzle or an abnormal nozzle; and a lower-layer forming step of ejecting droplets from the plurality of nozzles 6 so as to form the lower layers L1a, ... Lna (n is an integer). When at least one of the plurality of nozzles 6 is determined to be an abnormal nozzle in the nozzle checking step, the head is cleaned before and/or after the lower-layer forming step.

In this configuration, in the nozzle checking step, an ejection state of a droplet ejected from each of the plurality of nozzles 6 of the head 1 is detected so as to determine whether each of the plurality of nozzles 6 is an abnormal nozzle that is abnormal in the amount of ejection or a normal nozzle that is normal in the amount of ejection. When at least one of the plurality of nozzles 6 is determined as an abnormal nozzle, the head 1 is cleaned before and/or after the lower-layer forming step. The cleaning, performed before or after the lower-layer forming step, may be performed a plurality of times before or after the lower-layer forming step. This ensures that suitable amounts of droplets are ejected from the cleaned head 1 in the steps following the lower-layer forming step, enabling at least a partial recovery from the adverse effect caused by the abnormal nozzle.

(i) In the upper-layer forming step, an upper layer is formed over the lower layer in such a manner that hitting positions of the droplets ejected from the plurality of nozzles 6 are different from hitting positions of the droplets ejected in the lower-layer forming step. A recovery nozzle E, which is a normal nozzle, is caused to eject a droplet F so as to cause the droplet F ejected from the recovery nozzle E to hit a hitting position of a droplet D ejected from the abnormal nozzle A in the lower-layer forming step. (ii) An amount of ejection of the droplet F ejected from the recovery nozzle E is adjusted based on the ejection state of the droplet D ejected from the abnormal nozzle A detected in the nozzle checking step. Thus, in the upper-layer forming step, a droplet F is ejected from the recovery nozzle E, which is a normal nozzle, in an amount of ejection that is based on the ejection state of the abnormal nozzle A so that the droplet F ejected from the recovery nozzle E hits the hitting position of the droplet D ejected from the abnormal nozzle A in the lower-layer forming step. This enables at least a partial recovery from the adverse effect (occurrence of an excess portion or a deficient portion) caused by the abnormal nozzle A.

Thus, the upper-layer forming step includes forming the upper layers L1b, ... Lnb (n is an integer) over the lower layers L1a, ... Lna (n is an integer) in such a manner that the hitting positions of the droplets ejected from the nozzles 6 are different from the hitting positions of the droplets in the lower-layer forming step. In the upper-layer forming step, the recovery nozzle E, which is a normal nozzle, is caused to eject the droplet F so as to cause the droplet F ejected from the recovery nozzle E to hit the hitting position of the droplet D ejected from the abnormal nozzle A in the lower-layer forming step. The amount of ejection of the droplet ejected from the recovery nozzle E is adjusted based on the ejection state of the droplet ejected from the abnormal nozzle A detected in the nozzle checking step.

Also in one embodiment of the method according to the present invention for producing a three-dimensional object, when the amount of ejection of the droplet ejected from the abnormal nozzle A detected in the nozzle checking step is smaller than the amount of ejection of the droplet ejected from the normal nozzle detected in the nozzle checking step, the amount of ejection of the droplet ejected from the recovery nozzle E may be adjusted to be larger than the amount of ejection of a droplet ejected from another normal nozzle different from the recovery nozzle E. When the amount of the droplet ejected from the abnormal nozzle A detected in the nozzle checking step is larger than the amount of ejection of the droplet ejected from the normal nozzle detected in the nozzle checking step, the amount of ejection of the droplet ejected from the recovery nozzle E may be adjusted to be smaller than the amount of ejection of the droplet ejected from the other normal nozzle different from the recovery nozzle E.

In this configuration, when the amount of ejection of the droplet ejected from the abnormal nozzle A is smaller than the amount of ejection of the droplet ejected from the normal nozzle, the amount of ejection of the droplet ejected from the recovery nozzle E is made larger than the amount of ejection of the droplet ejected from the normal nozzle. When the amount of ejection of the droplet ejected from the abnormal nozzle A is larger than the amount of ejection of the droplet ejected from the normal nozzle, the amount of ejection of the droplet ejected from the recovery nozzle E is made smaller than the amount of ejection of the droplet ejected from the normal nozzle. This more efficiently enables a recovery from the adverse effect caused by the abnormal nozzle A.

Also in one embodiment of the method according to the present invention for producing a three-dimensional object, when the amount of ejection of the droplet ejected from the abnormal nozzle A detected in the nozzle checking step is smaller than the amount of ejection of the droplet ejected from the normal nozzle detected in the nozzle checking step, the amount of ejection of the droplet ejected from the recovery nozzle E may be adjusted to a value that is larger than an average value of amounts of ejection of droplets ejected from normal nozzles excluding the recovery nozzle E in the upper-layer forming step and that is equivalent to or less than twice the average value.

In this configuration, the amount of ejection of the droplet ejected from the recovery nozzle E in the upper-layer forming step is determined based on an average value of the amounts of ejection of droplets ejected in the upper-layer forming step from normal nozzles excluding the recovery nozzle E. This ensures efficient layer formation, without calculating the amount of ejection from the recovery nozzle E every time a droplet is ejected from the recovery nozzle E. Additionally, keeping the amount of ejection of the droplet ejected from the recovery nozzle E equivalent to or less than twice the above-described average value prevents excessive droplet ejection, and inhibiting unnecessary ejection results in a reduction in the consumption of the material of the three-dimensional object.

Also in one embodiment of the method according to the present invention for producing a three-dimensional object, the upper-layer forming step may include making a drawing origin at which the head 1 is located when the plurality of nozzles 6 start ejecting the droplets different from a drawing origin in the lower-layer forming step.

In this configuration, the drawing origin in the lower-layer forming step and the drawing origin in the upper-layer forming step are shifted from each other. This more efficiently enables the upper layer to be formed over the lower layer with the hitting positions of the droplets from the nozzles 6 being different from the hitting positions in the lower-layer forming step.

Also in one embodiment of the method according to the present invention for producing a three-dimensional object, in the upper-layer forming step, the upper-layer forming step may include moving the drawing origin in the upper-layer forming step randomly from the drawing origin in the lower-layer forming step.

In this configuration, even though the droplet ejected from the recovery nozzle E enables a recovery from the adverse effect caused by the abnormal nozzle A, the adverse effect somewhat remains in some portions; still, these portions are deconcentrated so that the adverse effect is made much less conspicuous.

Also in one embodiment of the method according to the present invention for producing a three-dimensional object, the upper-layer forming step may include: after forming the upper layers L1b, ... Lnb (n is an integer) over the lower layers L1a, ... Lna (n is an integer) in the upper-layer forming step, a flattening step of removing an excess portion from the upper layers L1b, ... Lnb (n is an integer) so as to flatten the upper layers L1b, ... Lnb (n is an integer); and after the flattening step, a curing step of curing the lower layers L1a, ... Lna (n is an integer) and the upper layers L1b, ... Lnb (n is an integer).

In this configuration, after the lower layers L1a, ... Lna (n is an integer) and the upper layers L1b, ... Lnb (n is an integer) have been formed, the lower layers L1a, ... Lna (n is an integer) and the upper layers L1b, ... Lnb (n is an integer) are flattened and cured at the same time. This increases the degree of flatness as a whole, and reduces the amount of excess portion removed at the time of flattening, resulting in a reduction in the consumption of the material of the three-dimensional object M.

One embodiment of the method according to the present invention for producing a three-dimensional object may include executing the lower-layer forming step, the upper-layer forming step, the flattening step, and the curing step a plurality of times and may further include a finishing-layer forming step of forming a finishing layer Lnc (n is an integer) over the upper layer Lnb (n is an integer) after a last upper-layer forming step performed for a last time and before the flattening step following the last upper-layer forming step. The finishing layer Lnc (n is an integer) has a configuration identical to a configuration of the upper layer Lnb (n is an integer). A last flattening step performed for a last time may include removing an excess portion of a predetermined thickness from an upper surface of the finishing layer Lnc (n is an integer).

In this configuration, a depression that the abnormal nozzle caused to occur on the last formed upper layer Lnb (n is an integer) is filled with the finishing layer Lnc (n is an integer), which has a configuration identical to a configuration of the upper layer Lnb (n is an integer). Then, an excess portion is removed and flattening is performed. This improves final shape accuracy.

Also in one embodiment of the method according to the present invention for producing a three-dimensional object, in a last curing step performed for the last time, the curing period of time may be longer than the curing period of time in another curing step.

In this configuration, while the finishing layer Lnc (n is an integer) is being cured, the upper layer Lnb (n is an integer) and the lower layer Lna (n is an integer) immediately under the finishing layer Lnc (n is an integer) are cured sufficiently. Specifically, in a configuration in which each of the upper layers L1b, ... Lnb (n is an integer) and the lower layers L1a, ... Lna (n is an integer) are cured in one curing step, if the curing period of time for each curing step is set at a minimum possible period of time, the last formed upper layer Lnb (n is an integer) and the last formed lower layer Lna (n is an integer) cannot be cured sufficiently in some cases. In this respect, as in this configuration, the curing period of time in the last curing step performed for the last time is longer than the curing period of time in another curing step. This enables the last formed upper layer Lnb (n is an integer) and the last formed lower layer Lna (n is an integer) to be cured sufficiently.

Also in one embodiment of the method according to the present invention for producing a three-dimensional object, the head 1 may be configured to move in a main scanning direction X relative to an ejection target region and configured to eject the droplets from the plurality of nozzles 6, and the head 1 may include a plurality of nozzle rows 6-1, 6-2, ... each including the plurality of nozzles 6 arranged in a sub-scanning direction Y crossing the main scanning direction X.

In this configuration, the head 1 includes a plurality of nozzle rows 6-1, 6-2, ... each including the plurality of nozzles 6 arranged in the sub-scanning direction Y. This increases the speed at which each layer is formed.

One embodiment of the three-dimensional-object producing apparatus according to the present invention includes: a head 1 including a plurality of nozzles 6; a nozzle check unit (the nozzle checker 3 and the nozzle check controller 4) configured to detect an ejection state of a droplet ejected from each of the plurality of nozzles 6 so as to determine whether each of the plurality of nozzles 6 is a normal nozzle or an abnormal nozzle; and a cleaner configured to clean the head.

This configuration provides effects equivalent to effects provided by the one embodiment of the method according to the present invention for producing a three-dimensional object.

The three-dimensional-object producing apparatus may further include an ejection controller 40 configured to control the plurality of nozzles 6 to eject droplets so as to form a lower layer Lna and configured to form an upper layer Lnb over the lower layer Lna in such a manner that hitting positions of the droplets ejected from the plurality of nozzles 6 are different from hitting positions of the droplets ejected in forming the lower layer Lna. In forming the upper layer Lnb, the ejection controller 40 may be configured to: cause a recovery nozzle, which is a normal nozzle, to eject a droplet in such a manner that the droplet ejected from the recovery nozzle hits a hitting position of a droplet ejected from the abnormal nozzle in forming the lower layer Lna; and adjust an amount of ejection of the droplet ejected from the recovery nozzle based on the ejection state of the droplet ejected from the abnormal nozzle detected by the nozzle check unit.

This configuration provides effects equivalent to the effects provided by the method according to the present invention for producing a three-dimensional object. [Industrial Applicability]

The present invention can be utilized to produce three-dimensional objects.

### [Description of the Reference Numeral]

- 1: Head
- 2: UV-LED lamp
- 3: Nozzle check unit
- 4: Nozzle check controller
- 5: Cleaner
- 6: Nozzle
- 6-1, 6-2: Nozzle row
- 7: Flattener
- 10: Support platform
- 20: Maintenance mechanism
- 30: Position controller
- 40: Ejection controller
- 100: Printer (three-dimensional-object producing apparatus)
- A: Abnormal nozzle
- C, D,: F Droplet
- E: Recovery nozzle
- L-1, ... L*n*: (*n* is an integer) Unit layer
- L1a, ... L*n*a: (*n* is an integer) Lower layer
- L1b, ... L*n*b: (*n* is an integer) Lower layer
- L*n*c: (*n* is an integer) Finishing layer
- M: Three-dimensional object

## Claims

1. A method for producing a three-dimensional object (M), the method comprising:
a nozzle checking step of detecting an ejection state of a droplet (C, D, F) ejected from each of a plurality of nozzles (6) of a head (1) so as to determine whether each of the plurality of nozzles (6) is a normal nozzle or an abnormal nozzle (A); and
a lower-layer forming step of ejecting droplets from the plurality of nozzles (6) so as to form a lower layer (L1a),
wherein when at least one of the plurality of nozzles (6) is determined to be an abnormal nozzle (A) in the nozzle checking step, the head (1) is cleaned before and/or after the lower-layer forming step,
**characterized by**
an upper-layer forming step of forming an upper layer (L1b) over the lower layer (L1a) in such a manner that hitting positions of the droplets ejected from the plurality of nozzles (6) are different from hitting positions of the droplets ejected in the lower-layer forming step,
wherein the upper-layer forming step comprises: causing a recovery nozzle (E), which is a normal nozzle, to eject a droplet so as to cause the droplet ejected from the recovery nozzle (E) to hit a hitting position of a droplet ejected from the abnormal nozzle (A) in the lower-layer forming step; and adjusting an amount of ejection of the droplet ejected from the recovery nozzle (E) based on the ejection state of the droplet ejected from the abnormal nozzle (A) detected in the nozzle checking step.

2. The method for producing the three-dimensional object (M) according to claim 1,
wherein when the amount of ejection of the droplet ejected from the abnormal nozzle (A) detected in the nozzle checking step is smaller than the amount of ejection of a droplet ejected from a normal nozzle detected in the nozzle checking step, the amount of ejection of the droplet ejected from the recovery nozzle (E) is adjusted to be larger than the amount of ejection of a droplet ejected from another normal nozzle different from the recovery nozzle (E), and
wherein when the amount of ejection of the droplet ejected from the abnormal nozzle (A) detected in the nozzle checking step is larger than the amount of ejection of the droplet ejected from the normal nozzle detected in the nozzle checking step, the amount of ejection of the droplet ejected from the recovery nozzle (E) is adjusted to be smaller than the amount of ejection of the droplet ejected from the other normal nozzle different from the recovery nozzle (E).

3. The method for producing the three-dimensional object (M) according to claim 1, wherein when the amount of ejection of the droplet ejected from the abnormal nozzle (A) detected in the nozzle checking step is smaller than the amount of ejection of the droplet ejected from the normal nozzle detected in the nozzle checking step, the amount of ejection of the droplet ejected from the recovery nozzle (E) is adjusted to a value that is larger than an average value of amounts of ejection of droplets ejected from normal nozzles excluding the recovery nozzle (E) in the upper-layer forming step and that is equivalent to or less than twice the average value.

4. The method for producing the three-dimensional object (M) according to any one of claims 1 to 3, wherein the upper-layer forming step comprises making a drawing origin at which the head (1) is located when the plurality of nozzles (6) start ejecting the droplets different from a drawing origin in the lower-layer forming step.

5. The method for producing the three-dimensional object (M) according to claim 4, wherein the upper-layer forming step comprises moving the drawing origin in the upper-layer forming step randomly from the drawing origin in the lower-layer forming step.

6. The method for producing the three-dimensional object (M) according to any one of claims 1 to 3, wherein the upper-layer forming step comprises
after forming the upper layer (L1b) over the lower layer (L1a) in the upper-layer forming step, a flattening step of removing an excess portion from the upper layer (L1b) so as to flatten the upper layer (L1b), and
after the flattening step, a curing step of curing the lower layer (L1a) and the upper layer (L1b).

7. The method for producing the three-dimensional object (M) according to claim 6,
wherein the lower-layer forming step, the upper-layer forming step, the flattening step, and the curing step are exectued a plurality of times,
wherein the method further comprises a finishing-layer forming step of forming a finishing layer (Lnc) over the upper layer (L1b) after a last upper-layer forming step performed for a last time and before the flattening step following the last upper-layer forming step, the finishing layer (Lnc) comprising a configuration identical to a configuration of the upper layer (L1b),
wherein a last flattening step performed for a last time comprises removing an excess portion of a predetermined thickness from an upper surface of the finishing layer (Lnc).

8. The method for producing the three-dimensional object (M) according to claim 7, wherein in a last curing step performed for a last time, a curing period of time is longer than a curing period of time in another curing step.

9. The method for producing the three-dimensional object (M) according to any one of claims 1 to 3,
wherein the head (1) is configured to move in a main scanning direction relative to an ejection target region and configured to eject the droplets from the plurality of nozzles (6), and
wherein the head (1) comprises a plurality of nozzle rows each comprising a plurality of the nozzles (6) arranged in a sub-scanning direction crossing the main scanning direction.

10. A three-dimensional object producing apparatus comprising:
a head (1) comprising a plurality of nozzles (6);
a nozzle check unit configured to detect an ejection state of a droplet (C, D, F) ejected from each of the plurality of nozzles (6) so as to determine whether each of the plurality of nozzles (6) is a normal nozzle or an abnormal nozzle (A); and
a cleaner configured to clean the head (1),
**characterized by**
an ejection controller configured to control the plurality of nozzles (6) to eject droplets so as to form a lower layer (L1a) and configured to form an upper layer (L1b) over the lower layer (L1a) in such a manner that hitting positions of the droplets ejected from the plurality of nozzles (6) are different from hitting positions of the droplets ejected in forming the lower layer (L1a),
wherein in forming the upper layer (L1b), the ejection controller is configured to: cause a recovery nozzle (E), which is a normal nozzle, to eject a droplet in such a manner that the droplet ejected from the recovery nozzle (E) hits a hitting position of a droplet ejected from the abnormal nozzle (A) in forming the lower layer (L1a); and adjust an amount of ejection of the droplet ejected from the recovery nozzle (E) based on the ejection state of the droplet ejected from the abnormal nozzle (A) detected by the nozzle check unit.

## Patentansprüche

1. Verfahren zum Herstellen eines dreidimensionalen Objekts (M), wobei das Verfahren umfasst:
einen Düsen-Prüfungs-Schritt mit Erfassen eines Ausstoßzustands eines von einer jeweiligen von mehreren Düsen (6) eines Kopfes (1) ausgestoßenen Tropfens (C, D, F), um derart zu bestimmen, ob eine jeweilige der mehreren Düsen (6) eine normale Düse oder eine anomale Düse (A) ist; und
einen Untere-Schicht-Ausbildungs-Schritt mit Ausstoßen von Tropfen aus den mehreren Düsen (6), um derart eine untere Schicht (L1a) auszubilden,
wobei, wenn bei dem Düsen-Prüfungs-Schritt bestimmt wird, dass mindestens eine der mehreren Düsen (6) eine anomale Düse (A) ist, der Kopf (1) vor und/oder nach dem Untere-Schicht-Ausbildungs-Schritt gereinigt wird,
**gekennzeichnet durch**
einen Obere-Schicht-Ausbildungs-Schritt mit Ausbilden einer oberen Schicht (L1b) über der unteren Schicht (L1a) auf solche Weise, dass Auftreffpositionen der aus den mehreren Düsen (6) ausgestoßenen Tropfen sich von Auftreffpositionen der bei dem Untere-Schicht-Ausbildungs-Schritt ausgestoßenen Tropfen unterscheiden,
wobei der Obere-Schicht-Ausbildungs-Schritt umfasst: Veranlassen, dass eine Korrekturdüse (E), bei der es sich um eine normale Düse handelt, einen Tropfen derart ausstößt, dass veranlasst wird, dass der von der Korrekturdüse (E) ausgestoßene Tropfen auf eine Auftreffposition eines bei dem Untere-Schicht-Ausbildungs-Schritt von der anomalen Düse (A) ausgestoßenen Tropfens auftrifft; und Anpassen einer Ausstoßmenge des von der Korrekturdüse (E) ausgestoßenen Tropfens basierend auf dem bei dem Düsen-Prüfungs-Schritt erfassten Ausstoßzustand des von der anomalen Düse (A) ausgestoßenen Tropfens.

2. Verfahren zum Herstellen des dreidimensionalen Objekts (M) nach Anspruch 1,
wobei, wenn die bei dem Düsen-Prüfungs-Schritt erfasste Ausstoßmenge des von der anomalen Düse (A) ausgestoßenen Tropfens kleiner als die bei dem Düsen-Prüfungs-Schritt erfasste Ausstoßmenge eines von einer normalen Düse ausgestoßenen Tropfens ist, die Ausstoßmenge des von der Korrekturdüse (E) ausgestoßenen Tropfens derart angepasst wird, dass sie größer ist als die Ausstoßmenge eines von einer anderen normalen Düse, bei der es sich nicht um die Korrekturdüse (E) handelt, ausgestoßenen Tropfens, und
wobei, wenn die bei dem Düsen-Prüfungs-Schritt erfasste Ausstoßmenge des von der anomalen Düse (A) ausgestoßenen Tropfens größer als die bei dem Düsen-Prüfungs-Schritt erfasste Ausstoßmenge des von der normalen Düse ausgestoßenen Tropfens ist, die Ausstoßmenge des von der Korrekturdüse (E) ausgestoßenen Tropfens derart angepasst wird, dass sie kleiner ist als die Ausstoßmenge des von der anderen normalen Düse, bei der es sich nicht um die Korrekturdüse (E) handelt, ausgestoßenen Tropfens.

3. Verfahren zum Herstellen des dreidimensionalen Objekts (M) nach Anspruch 1, wobei, wenn die bei dem Düsen-Prüfungs-Schritt erfasste Ausstoßmenge des von der anomalen Düse (A) ausgestoßenen Tropfens kleiner als die bei dem Düsen-Prüfungs-Schritt erfasste Ausstoßmenge des von der normalen Düse ausgestoßenen Tropfens ist, die Ausstoßmenge des von der Korrekturdüse (E) ausgestoßenen Tropfens auf einen Wert angepasst wird, der größer als ein Mittelwert von Ausstoßmengen von Tropfen ist, die von normalen Düsen mit Ausnahme der Korrekturdüse (E) bei dem Obere-Schicht-Ausbildungs-Schritt ausgestoßen werden, und der äquivalent dem doppelten oder kleiner als der doppelte Mittelwert ist.

4. Verfahren zum Herstellen des dreidimensionalen Objekts (M) nach einem der Ansprüche 1 bis 3, wobei der Obere-Schicht-Ausbildungs-Schritt umfasst, einen Zeichenursprung, an welchem sich der Kopf (1) befindet, wenn die mehreren Düsen (6) mit Ausstoßen der Tropfen beginnen, verschieden von einem Zeichenursprung bei dem Untere-Schicht-Ausbildungs-Schritt zu machen.

5. Verfahren zum Herstellen des dreidimensionalen Objekts (M) nach Anspruch 4, wobei der Obere-Schicht-Ausbildungs-Schritt umfasst, den Zeichenursprung bei dem Obere-Schicht-Ausbildungs-Schritt zufällig gegenüber dem Zeichenursprung bei dem Untere-Schicht-Ausbildungs-Schritt zu verschieben.

6. Verfahren zum Herstellen des dreidimensionalen Objekts (M) nach einem der Ansprüche 1 bis 3, wobei der Obere-Schicht-Ausbildungs-Schritt umfasst:
nach Ausbilden der oberen Schicht (L1b) über der unteren Schicht (L1a) bei dem Obere-Schicht-Ausbildungs-Schritt, einen Glättungsschritt mit Entfernen eines überschüssigen Abschnitts der oberen Schicht (L1b), um derart die obere Schicht (L1b) zu glätten, und
nach dem Glättungsschritt einen Härtungsschritt mit Härten der unteren Schicht (L1a) und der oberen Schicht (L1b).

7. Verfahren zum Herstellen des dreidimensionalen Objekts (M) nach Anspruch 6,
wobei der Untere-Schicht-Ausbildungs-Schritt, der Obere-Schicht-Ausbildungs-Schritt, der Glättungsschritt und der Härtungsschritt mehrfach ausgeführt werden,
wobei das Verfahren ferner einen Deckschicht-Ausbildungs-Schritt mit Ausbilden einer Deckschicht (Lnc) über der oberen Schicht (L1b) nach einem ein letztes Mal durchgeführten letzten Obere-Schicht-Ausbildungs-Schritt und vor dem auf den letzten Obere-Schicht-Ausbildungs-Schritt folgenden Glättungsschritt, wobei die Deckschicht (Lnc) eine Ausgestaltung umfasst, die mit einer Ausgestaltung der oberen Schicht (L1b) identisch ist,
wobei ein letzter Glättungsschritt, der ein letztes Mal durchgeführt wird, ein Entfernen eines überschüssigen Abschnitts mit einer vorbestimmten Dicke einer oberen Fläche der Deckschicht (Lnc) umfasst.

8. Verfahren zum Herstellen des dreidimensionalen Objekts (M) nach Anspruch 7, wobei bei einem letzten Härtungsschritt, der ein letztes Mal durchgeführt wird, eine Härtungsdauer länger ist als eine Härtungsdauer bei einem anderen Härtungsschritt.

9. Verfahren zum Herstellen des dreidimensionalen Objekts (M) nach einem der Ansprüche 1 bis 3,
wobei der Kopf (1) dazu eingerichtet ist, sich in einer Hauptabtastrichtung relativ zum einem Ausstoß-Zielbereich zu bewegen und dazu eingerichtet ist, die Tropfen aus den mehreren Düsen (6) auszustoßen, und
wobei der Kopf (1) mehrere Düsenzeilen umfasst, welche jeweils mehrere der Düsen (6), angeordnet in einer Nebenabtastrichtung, welche die Hauptabtastrichtung schneidet, umfasst.

10. Vorrichtung zum Herstellen eines dreidimensionalen Objekts, umfassend:
einen Kopf (1) mit mehreren Düsen (6);
eine Düsen-Prüfungs-Einheit, die dazu eingerichtet ist, einen Ausstoßzustand eines von einer jeweiligen der mehreren Düsen (6) ausgestoßenen Tropfens (C, D, F) zu erfassen, um derart zu bestimmen, ob eine jeweilige der mehreren Düsen (6) eine normale Düse oder eine anomale Düse (A) ist; und
einen Reiniger, der dazu eingerichtet ist, den Kopf (1) zu reinigen,
**gekennzeichnet durch**
eine Ausstoß-Steuereinheit, die dazu eingerichtet ist, die mehreren Düsen (6) derart zu steuern, dass sie eine untere Schicht (L1a) ausbilden, und dazu eingerichtet ist, eine obere Schicht (L1b) über der unteren Schicht (L1b) auf solche Weise auszubilden, dass Auftreffpositionen der aus den mehreren Düsen (6) ausgestoßenen Tropfen sich von Auftreffpositionen der beim Ausbilden der unteren Schicht (L1a) ausgestoßenen Tropfen unterscheiden,
wobei beim Ausbilden der oberen Schicht (L1b) die Ausstoß-Steuereinheit dazu eingerichtet ist, zu veranlassen, dass eine Korrekturdüse (E), bei der es sich um eine normale Düse handelt, einen Tropfen auf solche Weise ausstößt, dass der von der Korrekturdüse (E) ausgestoßene Tropfen auf eine Auftreffposition eines bei dem Ausbilden der unteren Schicht (L1a) von der anomalen Düse (A) ausgestoßenen Tropfens auftrifft; und eine Ausstoßmenge des von der Korrekturdüse (E) ausgestoßenen Tropfens basierend auf dem von der Düsen-Prüfungs-Einheit erfassten Ausstoßzustand des von der anomalen Düse (A) ausgestoßenen Tropfens anzupassen.

## Revendications

1. Procédé de production d'un objet tridimensionnel (M), le procédé comprenant :
une étape de vérification de buses consistant à détecter un état d'éjection d'une gouttelette (C, D, F) éjectée à partir de chaque buse d'une pluralité de buses (6) d'une tête (1) de façon à déterminer si chaque buse de la pluralité de buses (6) est une buse normale ou une buse anormale (A) ; et
une étape de formation de couche inférieure consistant à éjecter des gouttelettes à partir de la pluralité de buses (6) de façon à former une couche inférieure (L1a),
dans lequel, lorsqu'au moins une buse de la pluralité de buses (6) est déterminée comme étant une buse anormale (A) à l'étape de vérification de buses, la tête (1) est nettoyée avant et/ou après l'étape de formation de couche inférieure,
**caractérisé par**
une étape de formation de couche supérieure consistant à former une couche supérieure (L1b) sur la couche inférieure (L1a) d'une manière telle que des positions de frappe des gouttelettes éjectées à partir de la pluralité de buses (6) soient différentes de positions de frappe des gouttelettes éjectées à l'étape de formation de couche inférieure,
dans lequel l'étape de formation de couche supérieure consiste à :
amener une buse de récupération (E), qui est une buse normale, à éjecter une gouttelette de façon à amener la gouttelette éjectée de la buse de récupération (E) à frapper une position de frappe d'une gouttelette éjectée à partir de la buse anormale (A) à l'étape de formation de couche inférieure ; et régler une quantité d'éjection de la gouttelette éjectée à partir de la buse de récupération (E) sur la base de l'état d'éjection de la gouttelette éjectée à partir de la buse anormale (A) détectée à l'étape de vérification de buses.

2. Procédé de production de l'objet tridimensionnel (M) selon la revendication 1,
dans lequel, lorsque la quantité d'éjection de la gouttelette éjectée à partir de la buse anormale (A) détectée à l'étape de vérification de buses est inférieure à la quantité d'éjection d'une gouttelette éjectée à partir d'une buse normale détectée à l'étape de vérification de buses, la quantité d'éjection de la gouttelette éjectée à partir de la buse de récupération (E) est réglée de sorte qu'elle soit supérieure à la quantité d'éjection d'une gouttelette éjectée à partir d'une autre buse normale différente de la buse de récupération (E), et
dans lequel, lorsque la quantité d'éjection de la gouttelette éjectée à partir de la buse anormale (A) détectée à l'étape de vérification de buses est supérieure à la quantité d'éjection de la gouttelette éjectée à partir de la buse normale détectée à l'étape de vérification de buses, la quantité d'éjection de la gouttelette éjectée à partir de la buse de récupération (E) est réglée de sorte qu'elle soit inférieure à la quantité d'éjection de la gouttelette éjectée à partir de l'autre buse normale différente de la buse de récupération (E).

3. Procédé de production de l'objet tridimensionnel (M) selon la revendication 1, dans lequel, lorsque la quantité d'éjection de la gouttelette éjectée à partir de la buse anormale (A) détectée à l'étape de vérification de buses est inférieure à la quantité d'éjection de la gouttelette éjectée à partir de la buse normale détectée à l'étape de vérification de buses, la quantité d'éjection de la gouttelette éjectée à partir de la buse de récupération (E) est réglée à une valeur qui est supérieure à une valeur moyenne de quantités d'éjection de gouttelettes éjectées à partir de buses normales à l'exclusion de la buse de récupération (E) à l'étape de formation de couche supérieure et qui est égale ou inférieure à deux fois la valeur moyenne.

4. Procédé de production de l'objet tridimensionnel (M) selon l'une quelconque des revendications 1 à 3, dans lequel l'étape de formation de couche supérieure consiste à prendre une origine de dessin au niveau de laquelle la tête (1) est située lorsque les buses de la pluralité de buses (6) démarrent une éjection des gouttelettes différente d'une origine de dessin de l'étape de formation de couche inférieure.

5. Procédé de production de l'objet tridimensionnel (M) selon la revendication 4, dans lequel l'étape de formation de couche supérieure consiste à déplacer de manière aléatoire l'origine de dessin de l'étape de formation de couche supérieure par rapport à l'origine de dessin de l'étape de formation de couche inférieure.

6. Procédé de production de l'objet tridimensionnel (M) selon l'une quelconque des revendications 1 à 3, dans lequel l'étape de formation de couche supérieure comprend
après la formation de la couche supérieure (L1b) sur la couche inférieure (L1a) à l'étape de formation de couche supérieure, une étape d'aplatissement consistant à retirer une partie en excès de la couche supérieure (L1b) de façon à aplatir la couche supérieure (L1b), et
après l'étape d'aplatissement, une étape de cuisson consistant à cuire la couche inférieure (L1a) et la couche supérieure (L1b).

7. Procédé de production de l'objet tridimensionnel (M) selon la revendication 6,
dans lequel l'étape de formation de couche inférieure, l'étape de formation de couche supérieure, l'étape d'aplatissement et l'étape de cuisson sont exécutées une pluralité de fois,
dans lequel le procédé comprend en outre une étape de formation de couche de finition consistant à former une couche de finition (Lnc) sur la couche supérieure (L1b) après une dernière étape de formation de couche supérieure exécutée une dernière fois et avant l'étape d'aplatissement qui suit la dernière étape de formation de couche supérieure, la couche de finition (Lnc) comprenant une configuration identique à une configuration de la couche supérieure (L1b),
dans lequel une dernière étape d'aplatissement exécutée une dernière fois consiste à retirer une partie en excès d'une épaisseur prédéterminée d'une surface supérieure de la couche de finition (Lnc).

8. Procédé de production de l'objet tridimensionnel (M) selon la revendication 7, dans lequel, lors d'une dernière étape de cuisson exécutée une dernière fois, une période de temps de cuisson est plus longue qu'une période de temps de cuisson qui correspond à une autre étape de cuisson.

9. Procédé de production de l'objet tridimensionnel (M) selon l'une quelconque des revendications 1 à 3,
dans lequel la tête (1) est configurée pour se déplacer dans une direction de balayage principal par rapport à une région cible d'éjection et est configurée pour éjecter les gouttelettes à partir de la pluralité de buses (6), et
dans lequel la tête (1) comprend une pluralité de rangées de buses comprenant chacune une pluralité de buses (6) disposées dans une direction de balayage secondaire coupant la direction de balayage principal.

10. Appareil de production d'objet tridimensionnel, comprenant :
une tête (1) comprenant une pluralité de buses (6) ;
une unité de vérification de buses configurée pour détecter un état d'éjection d'une gouttelette (C, D, F) éjectée à partir de chaque buse de la pluralité de buses (6) de façon à déterminer si chaque buse de la pluralité de buses (6) est une buse normale ou une buse anormale (A) ; et
un dispositif de nettoyage configuré pour nettoyer la tête (1),
**caractérisé par**
un organe de commande d'éjection configuré pour commander les buses de la pluralité de buses (6) pour qu'elles éjectent des gouttelettes de façon à former une couche inférieure (L1a) et configuré pour former une couche supérieure (L1b) sur la couche inférieure (L1a) d'une manière telle que des positions de frappe des gouttelettes éjectées à partir de la pluralité de buses (6) soient différentes de positions de frappe des gouttelettes éjectées lors de la formation de la couche inférieure (L1a),
dans lequel, lors de la formation de la couche supérieure (L1b), l'organe de commande d'éjection est configuré pour: amener une buse de récupération (E), qui est une buse normale, à éjecter une gouttelette d'une manière telle que la gouttelette éjectée à partir de la buse de récupération (E) frappe une position de frappe d'une gouttelette éjectée à partir de la buse anormale (A) lors de la formation de la couche inférieure (L1a) ; et régler une quantité d'éjection de la gouttelette éjectée à partir de la buse de récupération (E) sur la base de l'état d'éjection de la gouttelette éjectée à partir de la buse anormale (A) détectée par l'unité de vérification de buses.
